# FASCICULE DE BREVET EUROPEEN

(11) **EP 1 849 686 B1**
(45) Date de publication et mention de la délivrance du brevet: **26.11.2008**
(21) Numéro de dépôt: 07290505.2
(22) Date de dépôt: 24.04.2007
(51) Int. Cl.: B62D 25/08, B62D 29/00, B29C 45/14

(54) **Elément structurel pour véhicule automobile et procédé de fabrication d'un tel élément**
Konstruktionselement für Kraftfahrzeug und Verfahren zur Herstellung eines solchen Elements
Structural element for an automobile and method of manufacturing same

(30) Priorité: 25.04.2006 FR 0603682
(43) Date de publication de la demande: 31.10.2007
(73) Titulaire: Faurecia Bloc Avant, 92000 Nanterre (FR)
(72) Inventeur: Riviere, Caroline, 25700 Valentigney (FR); Laurent, Claude, 25420 Voujeaucourt (FR); Berne, Sébastien, 70400 Luze (FR)
(74) Mandataire: Domenego, Bertrand

(56) Documents cités:
- EP-A- 0 679 565
- EP-A- 1 380 493
- EP-A- 1 500 488
- EP-B- 1 032 527
- WO-A-20/04056610
- DE-A- 10 014 332

## Description

La présente invention concerne un élément structurel pour véhicule automobile, du type comprenant :
- un premier corps métallique allongé creux à section transversale fermée ;
- un deuxième corps en matière plastique continu et surmoulé sur le premier corps métallique, le deuxième corps en matière plastique comprenant au moins deux bagues entourant le premier corps métallique, les bagues étant espacées longitudinalement.

WO 2004/056610 décrit un élément structurel pour véhicule automobile comprenant un tube métallique et un corps en matière plastique surmoulé sur le tube. Le corps en matière plastique est lié au tube, d'une part, par des boutons de matière plastique situé à l'intérieur du tube et formés à travers des ouvertures du tube, et, d'autre part, par des parties entourant le tube.

Néanmoins, la liaison du corps en matière plastique au tube nécessite, d'une part, des premières ouvertures pour le passage des boutons à l'intérieur du tube, et, d'autre part, des deuxièmes ouvertures situées en regard des premières ouvertures, pour permettre l'insertion de parties mobiles du moule dans le tube pour former les boutons à l'intérieur du tube.

Ces premières et deuxièmes ouvertures diminuent la résistance mécanique de l'élément structurel dans son ensemble. En outre, la fabrication nécessite un moule compliqué du fait qu'il comprend des parties mobiles.

EP 1 500 488 A divulgue un élément structurel selon le préambule de la revendication 1.

Un but de l'invention est de proposer un élément structurel de résistance améliorée et de fabrication aisée.

A cet effet, l'invention propose un élément structurel selon la revendication 1.

Selon d'autres modes de réalisation, l'élément structurel comprend une ou plusieurs des caractéristiques suivantes, prise(s) isolément ou selon toutes les combinaisons techniquement possibles :
- chaque bague est surmoulée sur une portion de section transversale circulaire du premier corps métallique ;
- le premier corps métallique possède une section transversale non-circulaire en dehors d'un tronçon du premier corps métallique sur lequel sont surmoulées les bagues ; et
- le rapport de la longueur axiale de chaque bague à la distance longitudinale entre les bagues est inférieur à 0,6.

L'invention concerne également un véhicule automobile comprenant un élément structurel tel que défini ci-dessus.

L'invention concerne également un procédé de fabrication selon la revendication 6.

Selon d'autres modes de mise en oeuvre, le procédé comprend une ou plusieurs des caractéristiques suivantes, prise(s) isolément ou selon toutes les combinaisons techniquement possibles :
- on surmoule chaque bague sur une portion de section transversale circulaire du premier corps métallique ;
- on surmoule chaque bague à une distance longitudinale d'un bord d'une chambre de moulage telle que le rapport de la longueur d'une bague à ce bord à la distance de cette bague à ce bord est supérieur à 0,3 ;
- le rapport de la longueur d'une bague à la distance longitudinale entre cette bague et un bord adjacent de la chambre de moulage est supérieur à 0,4 ; et
- le rapport de la longueur axiale de chaque bague à la distance longitudinale entre les bagues est inférieur à 0,6.

L'invention et ses avantages seront mieux compris à l'étude de la description qui va suivre, donnée uniquement à titre d'exemple, et faite en se référant aux dessins annexés, sur lesquels :
- les figures 1 et 2 sont des vues respectivement de face et en perspective d'un élément structurel conforme à l'invention ;
- la figure 3 est une vue partielle agrandie de la zone III de la figure 1 ; et
- les figures 4 et 5 sont des vues en coupe selon IV-IV et V-V de l'élément structurel de la figure 1.

Dans tout ce qui suit, les orientations sont les orientations habituelles d'un véhicule automobile.

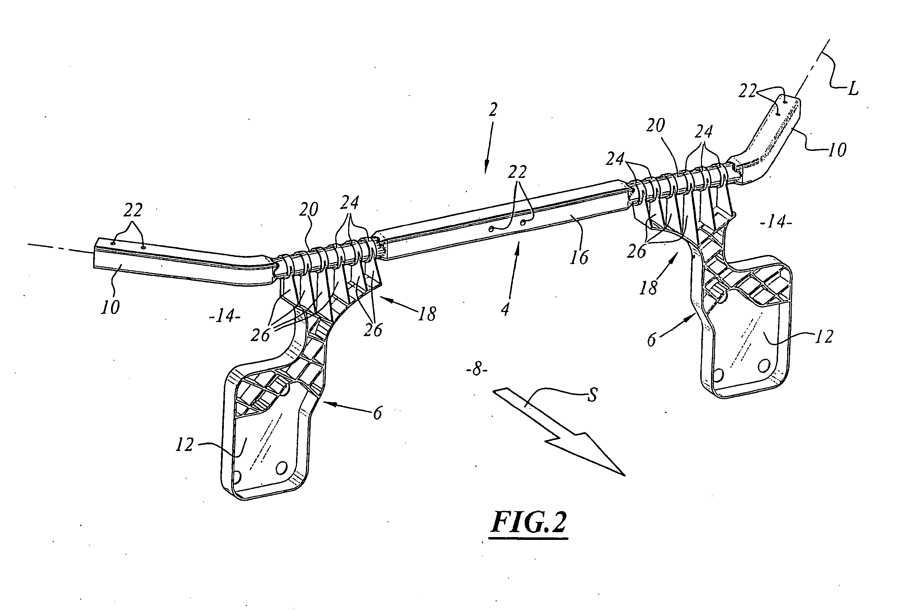

Ainsi, les termes « avant », « arrière », « latéral », « droite », « gauche », « horizontal », « vertical », « supérieur », et « inférieur » s'entendent par rapport à la position d'un conducteur et au sens de déplacement du véhicule en marche avant, matérialisé par une flèche « S » sur la figure 2.

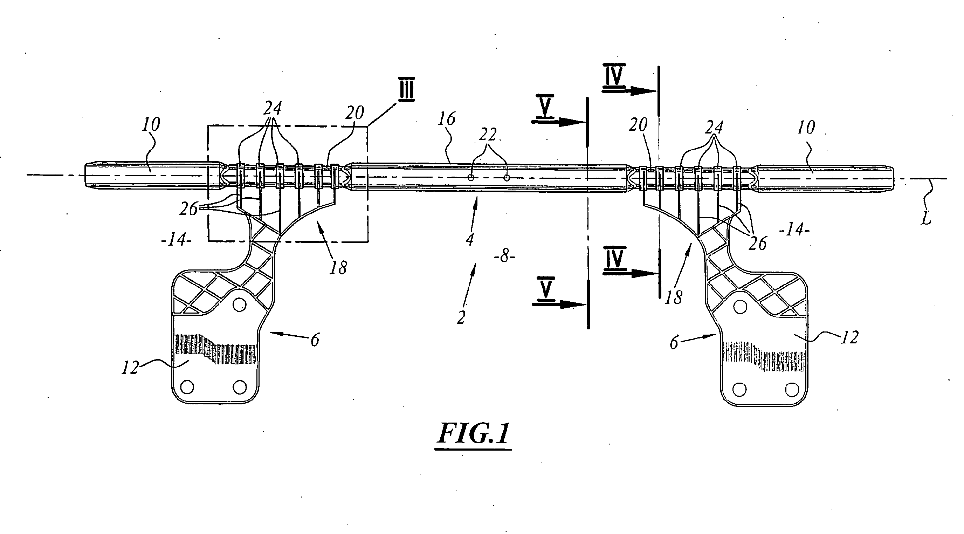

En se référant aux figures 1 à 3, l'élément structurel 2 comprend une traverse supérieure 4 tubulaire métallique, allongée sensiblement horizontalement suivant une ligne L longitudinale de la traverse 4, et deux montants latéraux 6 en matière plastique, qui s'étendent sensiblement verticalement.

Les deux montants 6 sont espacés latéralement l'un de l'autre, et s'étendent vers le bas à partir de la traverse 4.

Un tel élément structurel 2 constitue une face avant de véhicule automobile, et est destiné à être monté à l'avant d'un véhicule automobile pour supporter divers équipements tels que des blocs optiques, un groupe moto-ventilateur, un radiateur, un condenseur...

Ainsi, les montants 6 délimitent entre eux un espace central 8 de réception, par exemple, d'un radiateur, d'un condenseur, et d'un groupe moto-ventilateur.

De même, les portions d'extrémité 10 de la traverse 4 définissent, avec des platines de support 12 des montants 6, s'étendant latéralement vers l'extérieur, des espaces 14 de réception de blocs optiques.

La traverse 4 comprend une portion centrale 16 s'étendant latéralement, les portions d'extrémité 10 étant inclinées vers l'arrière par rapport à la portion centrale 16. Ainsi, la ligne L est courbe. En variante, la ligne L est rectiligne.

Chaque montant 6 comprend, à son extrémité supérieure, une portion 18 de liaison du montant 6 à un tronçon 20 correspondant de la traverse 4 situé longitudinalement entre une des portions d'extrémité 10 et la portion centrale 16. Les tronçons 20 sont espacés latéralement.

Chaque portion 18 comprend un groupe de bagues 24, ici au nombre de six, espacées suivant la ligne L, chaque bague 24 entourant le tronçon 20 correspondant, et des plaques 26, chaque plaque 26 s'étendant verticalement vers le bas à partir d'une bague 24 correspondante pour relier cette bague au reste du montant 6.

Chaque montant 6 est continu. Ainsi, chaque montant 6 est monobloc, et ses différentes parties sont venues de matières les unes avec les autres. En particulier, les bagues 24 de chaque montant 6 sont venues de matière les une avec les autres.

La traverse 4 présente en section transversale un contour fermé. La traverse 4 possède ainsi une résistance mécanique importante.

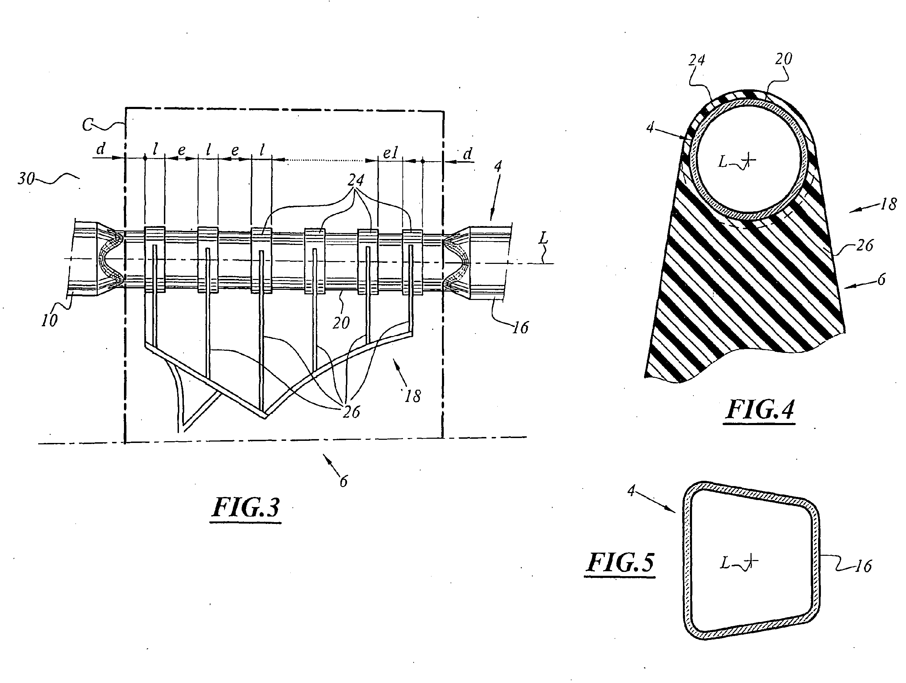

Tel que représentée sur les figures 4 et 5, la traverse 4 possède dans chaque tronçon 20 une section transversale circulaire (figure 4), et, en dehors des tronçons 20, une section transversale non-circulaire (figure 5), ici trapézoïdale. La section transversale est non-circulaire dans les portions d'extrémité 10 et dans la portion centrale 16.

Chaque tronçon 20 possède une section transversale constante. En variante, un tronçon 20 comprend des segments de surmoulage de section transversale circulaire séparés par des segments intermédiaires de section différente, par exemple non-circulaire, une bague étant surmoulée sur chaque segment de surmoulage.

Comme illustré sur la figure 4, chaque bague 24, et de façon plus général chaque montant 6, s'étend, dans chaque section transversale du tronçon 20 correspondant, en dehors du contour du tronçon 20.

Chaque montant 6 est ainsi surmoulé sur l'extérieur du tronçon 20 correspondant sans formation d'ouverture entre l'intérieur et l'extérieur dans le tronçon 20.

La traverse 4 est dans son ensemble dépourvue d'ouverture, en particulier sur les tronçons 20. La traverse 4 est éventuellement munie de trous 22 de fixation d'accessoires sur la traverse, mais ces trous 22 sont de faible dimension, et situés en dehors des tronçons 20.

La traverse 4 est réalisée par exemple en aluminium, auquel cas son épaisseur est comprise entre 2mm et 4mm, ou en acier, auquel cas son épaisseur est comprise entre 1 mm et 2,5mm.

Comme on peut mieux le voir sur la figure 3 illustrant la portion 18 du montant 6 droit (à gauche sur les figures 1 et 2), les bagues 24 d'un montant 6 possèdent des longueurs longitudinales l, qui sont ici identiques d'une bague à l'autre.

Chaque bague 24 est espacée de la bague adjacente ou de chacune des bagues 24 adjacentes d'une certaine distance longitudinale e ou e1.

Selon un procédé de fabrication de l'élément 2, dans une première étape de formation de la traverse 4, on réalise la traverse 4 à partir d'un tube cylindrique de section sensiblement circulaire identique à celle des tronçons 20, en disposant le tube dans un moule d'hydroformage, et en déformant le tube radialement vers l'extérieur par application d'une pression uniforme à l'intérieur du tube pour lui conférer, en dehors des tronçons 20, une section différente, selon la rigidité souhaitée pour la traverse 4.

Dans une deuxième étape de formation d'un montant 6, comme représenté sur la figure 3, on place la traverse 4 dans une chambre de moulage dont les bords 30 à proximité de la portion 18 du montant 6 sont illustrées de façon schématique par des traits mixtes C, et on injecte de la matière plastique sous pression dans la chambre pour former le montant 6 monobloc.

Les bords 30 délimitent la limite d'étanchéité entre l'intérieur et l'extérieur de la chambre de moulage.

Chaque portion 18 comprend des bagues 24 latérales entre lesquelles sont situées les autres bagues 24 de la portion 18. Chaque bague 24 latérale est espacée longitudinalement d'un bord 30 le plus proche d'une distance longitudinale d.

Il est possible de former les montants 6 simultanément dans un moule comprenant une chambre pour chaque montant 6, ou lors de deux étapes successives.

Lors du surmoulage des montants 6, un risque est que la traverse 4 s'écrase sous l'effet de la pression élevée appliquée par la matière plastique sur la surface externe de la traverse 4 qui est creuse.

Selon un aspect de l'invention, le rapport R de la longueur l de chaque bague 24 d'un montant 6 à la distance e ou e1 entre cette bague 24 et la ou chacune des bagues 24 adjacentes de ce montant 6 est inférieur à 1. Dans le cas d'une traverse en acier, le rapport R est de préférence inférieur à 0.6.

Selon un autre aspect de l'invention, le rapport F de la longueur I de chaque bague 24 latérale à la distance longitudinale d au bord 30 le plus proche est supérieure à 0,3, et de préférence supérieure à 0,4, notamment dans le cas de l'acier.

Le respect des rapports R et/ou F permet de limiter le risque d'écrasement, tout en assurant un recouvrement suffisant de la traverse 4 par la matière plastique pour assurer une liaison satisfaisante de chaque montant 6 à la traverse 4.

De préférence, le rapport R est supérieur à 0,2 pour assurer une liaison satisfaisante entre chaque montant 6 et la traverse 4.

La cohésion obtenue entre la matière plastique et la traverse 4 permet d'éviter la rotation de chaque bague 24 par rapport au tronçon 20 correspondant autour de la ligne L.

La liaison de chaque montant 6 à la traverse 4 uniquement par des bagues 24 entourant extérieurement la traverse 4 évite la formation d'ouvertures, en particulier dans les tronçons 20, ce qui préserve la résistance de la traverse 4. Le surmoulage des bagues 24 est effectué simplement sans parties de moule insérées à l'intérieur de la traverse 4.

Le surmoulage des bagues 24 sur des tronçons 20 de section circulaire permet une répartition radiale uniforme des efforts de pression lors du surmoulage, ce qui diminue encore les risques d'écrasement, et facilite la fabrication.

Dans l'exemple illustré, les bords 30 se situent aux extrémités longitudinales du tronçon 20, à proximité de la transition entre la section circulaire (tronçon 20) et a section non circulaire (trapézoïdale). Les bords 30 se situent au droit d'une section circulaire. Ainsi, seul le tronçon 20 de section circulaire, très résistante à la pression extérieure, est inséré dans la chambre de moulage.

Ainsi, grâce à l'invention, on obtient un élément structurel « hybride », i.e. constitué de métal et de matière plastique surmoulée sur le métal, pouvant être obtenu facilement et présentant une résistance satisfaisante.

L'invention s'applique aux faces avant et plus généralement à tout élément de structure de véhicule automobile.

## Revendications

1. Elément structurel pour véhicule automobile constituant une face avant de véhicule automobile, du type comprenant :
- une traverse métallique (4) allongée creuse à section transversale fermée ;
- deux montants en matière plastique (6), chaque montant (6) étant continu surmoulé sur la traverse métallique (4), et chaque montant (6) étant, dans chaque section transversale de la traverse métallique (4), entièrement situé à l'extérieur du contour de la traverse métallique (4),
**caractérisé en ce que** chaque montant (6) comprend au moins deux bagues (24) entourant la traverse métallique (4), les bagues (24) de chaque montant (6) sont espacées longitudinalement, et le rapport de la longueur axiale (I) de chaque bague d'un montant (6) à la distance longitudinale (e, e1) entre les bagues (24) de ce montant (6) est inférieur à 1.

2. Elément structurel selon la revendication 1, **caractérisé en ce** chaque bague (24) d'un montant (6) est surmoulée sur un tronçon (20) de section transversale circulaire de la traverse métallique (4).

3. Elément structurel selon la revendication 2, **caractérisé en ce que** la traverse métallique (4) possède une section transversale non-circulaire en dehors du ou des tronçons (20) de la traverse (4) sur le(s)quel(s) sont surmoulées les bagues (24) des montants (6).

4. Elément structurel selon l'une quelconque des revendications précédentes, **caractérisé en ce que** le rapport de la longueur axiale (I) de chaque bague (24) d'un montant (6) à la distance longitudinale (e, e1) entre les bagues (24) de ce montant (6) est inférieur à 0,6.

5. Véhicule automobile comprenant un élément structurel selon l'une quelconque des revendications précédentes.

6. Procédé de fabrication d'un élément structurel (2) pour véhicule automobile constituant une face avant de véhicule automobile, du type comprenant une traverse métallique (4) allongée creuse à section transversale fermée, et deux montants en matière plastique (6), chaque montant (6) étant continu surmoulé sur le premier corps métallique (4), et chaque montant (6) étant, dans chaque section transversale de la traverse (4), entièrement situé à l'extérieur du contour de la traverse (4),
dans lequel on lie chaque montant (6) sur la traverse métallique (4) en surmoulant sur la traverse au moins deux bagues (24) du montant (6) espacées longitudinalement, chaque bague (24) entourant la traverse métallique (4), le rapport de la longueur axiale (I) de chaque bague (24) d'un montant (6) à la distance longitudinale entre les bagues (e, e1) de ce montant étant inférieur à 1.

7. Procédé selon la revendication 6, **caractérisé en ce qu'**on surmoule chaque bague (24) d'un montant (6) sur un tronçon (20) de section transversale circulaire de la traverse (4).

8. Procédé selon la revendication 7, **caractérisé en ce que** l'on surmoule chaque bague (24) à une distance longitudinale (d) d'un bord (30) d'une chambre de moulage telle que le rapport (F) de la longueur (I) d'une bague (24) à ce bord (30) à la distance de cette bague à ce bord (30) est supérieur à 0,3.

9. Procédé selon la revendication 8, **caractérisé en ce que** le rapport (F) de la longueur (I) d'une bague (24) à la distance longitudinale (d) entre cette bague (24) et un bord (30) adjacent de la chambre de moulage est supérieur à 0,4.

10. Procédé selon l'une quelconque des revendications 6 à 9, **caractérisé en ce que** le rapport (R) de la longueur axiale (I) de chaque bague (24) d'un montant (6) à la distance longitudinale (e ou e1) entre les bagues (24) de ce montant (6) est inférieur à 0,6.

## Claims

1. A structural element for a motor vehicle constituting a motor vehicle front face, of the type comprising:
- an elongate, hollow metallic cross-piece (4) with a closed cross-section;
- two uprights of plastics material (6), each upright (6) being continuous and overmoulded onto the metallic cross-piece (4), and each upright (6) being, in each cross-section of the metallic cross-piece (4), entirely situated outside the contour of the metallic cross-piece (4),
**characterised in that** each upright (6) comprises at least two rings (24) surrounding the metallic cross-piece (4), the rings (24) of each upright (6) are spaced apart longitudinally, and the ratio of the axial length (l) of each ring of an upright (6) to the longitudinal distance (e, e1) between the rings (24) of said upright (6) is less than 1.

2. A structural element according to claim 1,
**characterised in that** each ring (24) of an upright (6) is overmoulded onto a portion (20) of circular cross-section of the metallic cross-piece (4).

3. A structural element according to claim 2,
**characterised in that** the metallic cross-piece (4) has a non-circular cross-section away from the portion(s) (20) of the cross-piece (4) onto which are overmoulded the rings (24) of the uprights (6).

4. A structural element according to any one of the preceding claims, **characterised in that** the ratio of the axial length (l) of each ring (24) of an upright (6) to the longitudinal distance (e, e1) between the rings (24) of said upright (6) is less than 0.6.

5. A motor vehicle comprising a structural element according to any one of the preceding claims.

6. A method for manufacturing a structural element (2) for a motor vehicle constituting a motor vehicle front face, of the type comprising an elongate, hollow metallic cross-piece (4) with a closed cross-section, and two uprights of plastics material (6), each upright (6) being continuous and overmoulded onto the first metallic body (4), and each upright (6) being, in each cross-section of the cross-piece (4), entirely situated outside the contour of the cross-piece (4), in which each upright (6) is joined to the metallic cross-piece (4) by overmoulding onto the cross-piece at least two longitudinally spaced apart rings (24) of the upright (6), each ring (24) surrounding the metallic cross-piece (4), the ratio of the axial length (l) of each ring (24) of an upright (6) to the longitudinal distance between the rings (e, e1) of said upright being less than 1.

7. A method according to claim 6, **characterised in that** each ring (24) of an upright (6) is overmoulded onto a portion (20) of circular cross-section of the cross-piece (4).

8. A method according to claim 7, **characterised in that** each ring (24) is overmoulded at a longitudinal distance (d) from one edge (30) of a moulding chamber such that the ratio (F) of the length (l) of a ring (24) at said edge (30) to the distance of this ring from said edge (30) is greater than 0.3.

9. A method according to claim 8, **characterised in that** the ratio (F) of the length (l) of a ring (24) to the longitudinal distance (d) between said ring (24) and an adjacent edge (30) of the moulding chamber is greater than 0.4.

10. A method according to any one of claims 6 to 9,
**characterised in that** the ratio (R) of the axial length (l) of each ring (24) of an upright (6) to the longitudinal distance (e or e1) between the rings (24) of said upright (6) is less than 0.6.

## Patentansprüche

1. Eine Kraftfahrzeugfrontseite bildendes Konstruktionselement für ein Kraftfahrzeug, umfassend:
- einen langgestreckten, hohlen Metallquerträger (4) mit geschlossenem Querschnitt;
- zwei Ständer (6) aus Kunststoff, wobei jeder Ständer (6) auf den Metallquerträger (4) durchgehend aufgeformt ist und jeder Ständer (6) in jedem Querschnitt des Metallquerträgers (4) ganz außerhalb des Umrisses des Metallquerträgers (4) gelegen ist,
**dadurch gekennzeichnet, dass** jeder Ständer (6) mindestens zwei Ringe (24) umfasst, die den Metallquerträger (4) umgeben, wobei die Ringe (24) jedes Ständers (6) in Längsrichtung beabstandet sind und das Verhältnis der axialen Länge (l) jedes Rings eines Ständers (6) zum Längsabstand (e, e1) zwischen den Ringen (24) dieses Ständers (6) kleiner als 1 ist.

2. Konstruktionselement nach Anspruch 1, **dadurch gekennzeichnet, dass** jeder Ring (24) eines Ständers (6) auf einen Abschnitt (20) mit kreisförmigem Querschnitt des Metallquerträgers (4) aufgeformt ist.

3. Konstruktionselement nach Anspruch 2, **dadurch gekennzeichnet, dass** der Metallquerträger (4) außerhalb des oder der Abschnitte (20) des Querträgers (4), auf den bzw. die die Ringe (24) der Ständer (6) aufgeformt sind, einen nicht-kreisförmigen Querschnitt besitzt.

4. Konstruktionselement nach einem der vorhergehenden Ansprüche, **dadurch gekennzeichnet, dass** das Verhältnis der axialen Länge (l) jedes Rings (24) eines Ständers (6) zum Längsabstand (e, e1) zwischen den Ringen (24) dieses Ständers (6) kleiner als 0,6 ist.

5. Kraftfahrzeug, umfassend ein Konstruktionselement nach einem der vorhergehenden Ansprüche.

6. Verfahren zur Herstellung eines eine KraftfahrzeugFrontseite bildenden Konstruktionselements für ein Kraftfahrzeug, umfassend einen langgestreckten, hohlen Metallquerträger (4) mit geschlossenem Querschnitt und zwei Ständer (6) aus Kunststoff, wobei jeder Ständer (6) auf den ersten Metallkörper (4) durchgehend aufgeformt ist und jeder Ständer (6) in jedem Querschnitt des Querträgers (4) ganz außerhalb des Umrisses des Querträgers (4) gelegen ist,
bei dem man jeden Ständer (6) mit dem Metallquerträger (4) verbindet, indem man auf den Querträger mindestens zwei in Längsrichtung beabstandete Ringe (24) des Ständers (6) aufformt, wobei jeder Ring (24) den Metallquerträger (4) umgibt, wobei das Verhältnis der axialen Länge (l) jedes Rings (24) eines Ständers (6) zum Längsabstand zwischen den Ringen (e, e1) dieses Ständers kleiner als 1 ist.

7. Verfahren nach Anspruch 6, **dadurch gekennzeichnet, dass** man jeden Ring (24) eines Ständers (6) auf einen Abschnitt (20) des Querträgers (4) mit kreisförmigem Querschnitt aufformt.

8. Verfahren nach Anspruch 7, **dadurch gekennzeichnet, dass** man jeden Ring (24) in einem solchen Längsabstand (d) von einem Rand (30) einer Formkammer aufformt, dass das Verhältnis (F) der Länge (l) eines Rings (24) an diesem Rand (30) zu dem Abstand dieses Rings von diesem Rand (30) größer als 0,3 ist.

9. Verfahren nach Anspruch 8, **dadurch gekennzeichnet, dass** das Verhältnis (F) der Länge (l) eines Rings (24) zum Längsabstand (d) zwischen diesem Ring (24) und einem benachbarten Rand (30) der Formkammer größer als 0,4 ist.

10. Verfahren nach einem der Ansprüche 6 bis 9, **dadurch gekennzeichnet, dass** das Verhältnis (R ) der axialen Länge (l) jedes Rings (24) eines Ständers (6) zum Längsabstand (e oder e1) zwischen den Ringen (24) dieses Ständers (6) kleiner als 0,6 ist.
